# EUROPÄISCHE PATENTSCHRIFT

(11) **EP 3 825 788 B1**
(45) Veröffentlichungstag und Bekanntmachung des Hinweises auf die Patenterteilung: **09.11.2022**
(21) Anmeldenummer: 19209913.3
(22) Anmeldetag: 19.11.2019
(51) Int. Cl.: G05B 13/02

(54) **REGELVORRICHTUNG, REGELSYSTEM UND REGELVERFAHREN ZUR REGELUNG EINER PHYSIKALISCHEN GRÖSSE EINES FLUIDES**
CONTROL DEVICE, CONTROL SYSTEM AND CONTROL METHOD FOR REGULATING A PHYSICAL QUANTITY OF A FLUID
DISPOSITIF DE RÉGLAGE, SYSTÈME DE RÉGLAGE ET PROCÉDÉ DE RÉGLAGE D'UNE GRANDEUR PHYSIQUE D'UN FLUIDE

(43) Veröffentlichungstag der Anmeldung: 26.05.2021
(73) Patentinhaber: Asco Numatics GmbH, 75248 Ölbronn-Dürrn (DE)
(72) Erfinder: Ritter, Reiner, 75433 Maulbronn (DE); Paulig, Martin, 75248 Ölbronn (DE); Ams, Felix, 75236 Kämpfelbach (DE); Steinle, Harald, 75443 Ötisheim (DE)
(74) Vertreter: Witte, Weller & Partner Patentanwälte mbB

(56) Entgegenhaltungen:
- DE-A1- 4 433 332
- DE-T2- 69 225 605
- DE-T2- 69 701 878
- US-A- 5 311 421
- US-A1- 2003 055 798

## Beschreibung

Die vorliegende Offenbarung betrifft eine Regelvorrichtung zur Regelung einer physikalischen Größe eines Fluides, wobei diese Regelvorrichtung zumindest eine Regeleinheit und eine Optimierungseinheit aufweist. Die Regeleinheit berechnet eine Stellgröße und gibt diese aus, wobei ein von der Optimierungseinheit ausgegebener Regelparameter für die Optimierung dieser Stellgröße zugrunde gelegt wird. Die Offenbarung betrifft ferner ein Regelsystem, beispielsweise eine Ventilanordnung, zur Regelung einer physikalischen Größe eines Fluides mit einer derartigen Regelvorrichtung. Schließlich betrifft die Offenbarung ein entsprechendes Regelverfahren zur Regelung einer physikalischen Größe eines Fluides, welche beispielsweise die Temperatur oder der Druck des Fluides sein können. Es kann sich jedoch auch um eine Durchflussmenge sowie um weitere Größen und Eigenschaften handeln.

Die Anforderungen an Genauigkeit und Stabilität für derartige Regelvorrichtungen steigen stetig, wobei solche Regelvorrichtungen bei industriellen, medizinischen und/oder wissenschaftlichen Anwendungen zum Einsatz kommen. Dies ist insbesondere bei der Prozessautomatisierung als auch bei der Fabrikautomatisierung von großem Interesse. Den gegebenen Anforderungen wird beispielsweise mit einem vorgesteuerten elektronischen Regler, umfassend einen mechanischen Präzisionsregler und eine digitale Regelelektronik, begegnet. Die digitale Regelelektronik hat dabei in der Regel mehrere Eingänge wie z.B. für den Sollwert oder den Istwert von Prozessgrößen bzw. von physikalischen Größen wie Temperatur, Druck, Drehzahl, Position, Kraft oder Geschwindigkeit. Dabei können diese Eingangsgrößen in analoger Form, digital oder über normierte Feldbusschnittstellen (Profinet, Ethernet, EtherCAT etc.) vorliegen. Die Ausgangsgrößen können dabei ebenfalls analog oder digital ausgebildet sein und bedienen in der Regel einen oder mehrere Aktoren.

Aus der EP 3 176 667 A1 ist eine Vorsteuereinheit zur Bereitstellung eines Vorsteuerdrucks für eine Ventileinheit zur geregelten Bereitstellung eines Fluides bekannt, wobei diese Vorsteuereinheit zumindest ein Vorsteuerventil, insbesondere zumindest ein elektrisch gesteuertes Vorsteuerventil, und eine Regeleinheit aufweist, die mit der Vorsteuereinheit gekoppelt ist.

Aus der DE 44 33 332 A1 ist eine Einrichtung zur adaptiven Regelung einer Strecke mit einer Signalvorverarbeitung bekannt, mit der aus dem zeitlichen Verlauf der Regelgröße Abtastwerte erzeugbar sind, und mit einem neuronalen Netz, das in Abhängigkeit von den Abtastwerten die Parameter des Reglers berechnet. Das neuronale Netz wird anhand von Lerndaten der Parameter und der Abtastwerte der Streckensprungantwort trainiert, die durch analytisch berechnete Parameter-Einstellregeln oder durch Regelkreissimulation und numerische Optimierung für ein oder mehrere Streckenmodelle generiert wurden.

Aus der US 2003/055798 A1 ist ein Regelungssystem mit einem neuronalen Netz parallel zu einem PID-Regler bekannt, wobei das System zumindest einen Eingangsanschluss des neuronalen Netzes zum Empfang eines Eingangssignals aufweist, das einen Prozesszustand darstellt. Ein erster Datensatz umfasst eine Vielzahl von Ausgangswerten des neuronalen Netzes, die während einer Trainingsperiode des neuronalen Netzes unter Verwendung einer Vielzahl von ersten Eingängen erhalten werden, die eine Vielzahl von Bedingungen des Prozesses darstellen. Im Betrieb trägt das neuronale Netz nur dann zu einem Ausgang des PID-Reglers bei, wenn zumindest ein mit dem Eingangssignal verbundenes Auslöseereignis erfasst wird, wobei zu diesem Zeitpunkt ein Wert des ersten Datensatzes, der der Zustandsabweichung entspricht, zu dem PID-Regler beiträgt.

Ein weiterer Ansatz, der in der Vergangenheit im Bereich der Regelungskonzepte verfolgt wurde, beinhaltet die Selbsteinstellung und ist unter dem Begriff "adaptive Regelung" zusammengefasst. Eine solche Regelung ist dazu ausgebildet, ihre Regelparameter an einen gegebenen Prozess anzupassen. Solche adaptiven Regler bringen in der Anwendungspraxis diverse Herausforderungen mit sich. Dies betrifft beispielsweise die aufwändige Inbetriebnahme, Stabilitätsprobleme im Regelkreis und/oder eine komplexe Bedienung. Aus diesem Grund haben sich adaptive Regler nicht auf allen Gebieten in dem ursprünglich angestrebten durchsetzen können.

Aus der DE 197 48 718 A1 ist ein Verfahren bekannt, welches die Parameter eines PID-Reglers mit Hilfe eines neuronalen Netzes entwirft. Dabei wird auf die Vorteile von künstlichen neuronalen Netzen zurückgegriffen, welche in der Lage sind, ausreichend komplexe Probleme mit vielen Eingabedaten und Variablen mit gesteigerter Qualität zu lösen. Gemäß der DE 197 48 718 A1 soll die Leistungsfähigkeit des regelungstechnischen Verfahrens durch Selbsteinstellung der Regeleinrichtung durch ein künstliches neuronales Netz in Abhängigkeit von einer Regelgröße erfolgen. Das neuronale Netz wird dabei anhand eines Lerndatensatzes trainiert. Somit soll eine schnelle und robuste Regeleinstellung hoher Güte, die mit geringen Anforderungen an Rechenleistung und Speicherkapazität verbunden ist, erreicht werden. Gleichwohl muss das neuronale Netz anwendungsspezifisch trainiert werden, wofür ein gewisser Aufwand vonnöten ist. Mit anderen Worten kann der Regler nicht direkt operativ genutzt werden, da ein gewisser Einrichtungs- und Trainingsaufwand erforderlich ist.

Generell besteht der Wunsch nach einer weiteren Erhöhung der Genauigkeit, Geschwindigkeit und Stabilität für elektronische Regler. Insbesondere besteht der Wunsch nach selbstoptimierten Regelvorrichtungen, deren Leistungsfähigkeit auch im operativen Betrieb erreicht wird. Nicht zuletzt besteht ein Bedarf an praxistauglichen Ansätzen.

Vor diesem Hintergrund liegt der Offenbarung die Aufgabe zugrunde, eine Regelvorrichtung zur Regelung einer physikalischen Größe eines Fluides anzugeben, wobei die Regelvorrichtung durch eine effiziente Implementierung eines künstlichen neuronalen Netzes eine stabile und genaue Regelung von physikalischen Größen, wie z.B. des Drucks oder der Temperatur eines Fluides ermöglicht. Beispielsweise lässt sich mit der Regelvorrichtung mindestens eine Ventileinheit als Aktuator hinreichend stabil betreiben, ohne dass es im Betrieb zu spürbaren Änderungen des Regelverhaltens kommt, die sich auf die physikalischen Größen und/oder den Durchsatz am Ausgang der Aktuatoren auswirken. Ferner ist die Regelvorrichtung möglichst dazu ausgebildet, eine noch präzisere Regelung der physikalischen Größen des Fluides zu erlauben. Weiterhin ist es wünschenswert, ein Regelsystem mit einer solchen Regelvorrichtung bereitzustellen. Daneben soll ein entsprechendes Regelverfahren angegeben werden, das eine genaue und stabile Regelung der physikalischen Größen des Fluides erlaubt.

Die Erfindung wird durch die unabhängigen Ansprüche definiert. Die abhängigen Ansprüche und die Beschreibung definieren weitere Ausgestaltungen.

Gemäß einer Ausgestaltung weist die Regelvorrichtung zur Regelung einer physikalischen Größe eines Fluides zumindest eine Regeleinheit und eine Optimierungseinheit auf. Die Regeleinheit ist dazu ausgestaltet, zumindest einen ersten Istwert und zumindest einen ersten Sollwert einer physikalischen Größe des Fluides zu empfangen, den ersten Istwert und den ersten Sollwert zu vergleichen, und, basierend auf diesem Vergleich, eine Stellgröße zu berechnen und auszugeben. Die Optimierungseinheit ist dazu ausgestaltet, zumindest eine physikalische Größe des Fluides beschreibende Signale in Form zumindest eines Istwerts als ersten Istwert zu erhalten, basierend auf dem zumindest einen Istwert einen Regelparameter anzupassen und an die Regeleinheit zu übergeben. Die Regeleinheit ist dazu ausgestaltet, die Stellgröße auf Basis des optimierten Regelparameters zu berechnen, um eine optimierte Stellgröße auszugeben.

Mit anderen Worten kann die Regeleinheit grundsätzlich konventionell betrieben werden. Die vorliegende Offenbarung schlägt vor, die Regelparameter separat zu optimieren.

Gemäß einer weiteren Ausgestaltung wird ein Regelsystem zur Regelung einer physikalischen Größe eines Fluides mit einer solchen Regelvorrichtung bereitgestellt. Neben der Regelvorrichtung weist dieses System ferner zumindest einen Aktuator auf, der dazu ausgestaltet ist, die von der Regeleinheit ausgegebene Stellgröße zu empfangen und zumindest eine physikalische Größe des Fluides basierend auf der empfangenen Stellgröße zu verändern. Weiterhin umfasst das Regelsystem einen oder mehrere Sensoren, die dazu ausgestaltet sind, die Istwerte der physikalischen Größen des Fluides zu messen.

In einer Ausführungsform umfasst das Regelsystem zumindest einen Multiplexer, der dazu ausgestaltet ist, die gemessenen Istwerte zu empfangen, einen Istwert der physikalischen Größen auszuwählen und diesen Istwert als ersten Istwert an die Regeleinheit der Regelvorrichtung zurückzuführen.

Gemäß einer weiteren Ausgestaltung wird ein Regelverfahren zur Regelung einer physikalischen Größe eines Fluides gemäß Anspruch 10 bereitgestellt.

Bei den physikalischen Größen des Fluides handelt es sich beispielsweise um den Druck des Fluides. Folglich handelt es sich bei den Sensoren in diesem Ausführungsbeispiel beispielsweise um Drucksensoren bzw. um Druckmessgeräte. Die Aktuatoren beeinflussen im Regelkreis des Systems zur Regelung der physikalischen Größe des Fluides eine Regelgröße und sind vorzugsweise als Ventile gestaltet bzw. ein Bestandteil von Ventilen. Das Öffnen und Schließen der Ventile erlaubt daher eine Regelung der Regelgröße. Es kann sich jedoch beispielsweise auch um die Temperatur des Fluides handeln. In diesem Ausführungsbeispiel sind die Sensoren beispielhaft als Thermosensoren gestaltet. Es kann sich jedoch auch um den Durchfluss (Menge pro Zeiteinheit) des Fluides handeln. Entsprechende Sensoren sind beispielhaft als Durchflussmesser gestaltet. Die Istwerte und Sollwerte werden der Regelvorrichtung bzw. dem Regelsystem als Signale zugeführt. Insbesondere die Istwerte werden regelmäßig über Sensoren ermittelt.

Der zumindest eine Istwert und der zumindest eine Sollwert können sich auf ein und dieselbe Größe beziehen. Es ist jedoch auch vorstellbar, dass sich der zumindest eine Istwert und der zumindest eine Sollwert auf verschiedene Größen beziehen.

Der oben genannte Aspekt der Offenbarung basiert auf der Idee, die Regelung eines Ventils bzw. eines Aktuators adaptiv zu gestalten. Dies wird gemäß dem vorgeschlagenen Ansatz durch die Optimierungseinheit erreicht. Die von der Regeleinheit auszugebende Stellgröße, welche an das Ventil bzw. den Aktuator übergeben wird, wird dabei mit Hilfe eines Regelparameters optimiert. Im Gegensatz zur DE 197 48 718 A1 wird somit nicht ein neuronales Netz selbst als Regler bzw. in der Regeleinheit verwendet, sondern lediglich ein von der Optimierungseinheit ausgegebener Regelparameter an die Regeleinheit übergeben. Dieser Ansatz kann die Praxistauglichkeit adaptiver Regelansätze verbessern, da die Erstparameter (beispielsweise bei der Inbetriebnahme) bereits vorgegeben werden können. Mit anderen Worten kann der Regler mit nur geringem Einrichtaufwand in Betrieb genommen werden. Während des operativen Betriebs erfolgt die adaptive Anpassung der Regelparameter. Es ist also nicht unbedingt notwendig, den Regler zeitaufwendig zu trainieren.

Mit diesem Ansatz (klassischer Regler mit adaptiv angepassten Regelparametern) kann ein grundsätzlich stabiles Systemverhalten erzielt werden. Dies lässt sich beispielsweise durch Vorgabe gewisser Grenzen (beispielsweise für die Regelparameter) erreichen, so dass ein Extremverhalten und ähnliche Ausreißer von Anfang an vermeidbar sind. Vorteile konventioneller Regelsysteme, insbesondere deren systemimmanente Stabilität, können weiterhin genutzt werden.

Im Rahmen der vorliegenden Offenbarung wird der zumindest eine Regelparameter adaptiv ermittelt bzw. adaptiv angepasst. D. h. mit anderen Worten, dass der zumindest eine Regelparameter im laufenden Betrieb der Regelvorrichtung veränderlich ist. Der zumindest eine Regelparameter kann beispielsweise an gegebene Umgebungsbedingungen, Exemplarstreuungen sowie an eine vorgegebene Regelgüte-Strategie angepasst werden. Die Regelvorrichtung passt sich im Idealfall automatisch (ohne Eingriff durch Fachpersonal) an die Anwendung und/oder die Regelstrecke an, um einen optimalen Regelparameter zu finden. Damit kann auch eine Reaktion auf Änderungen in der Regelstrecke und/oder geänderte Umgebungsbedingungen, sowie auf äußere Einflüsse erfolgen.

Gemäß einer weiteren Ausgestaltung ist die Optimierungseinheit ferner dazu ausgestaltet, nicht nur einen Istwert einer physikalischen Größe des Fluides zu empfangen, sondern mehrere Istwerte von physikalischen Größen des Fluides. Basierend auf dieser Mehrzahl von Istwerten ist die Optimierungseinheit gemäß dieser Ausgestaltung dazu ausgebildet, den Regelparameter basierend auf dieser Mehrzahl von Istwerten anzupassen und diesen an die Regeleinheit zu übergeben. Somit können mehrere verschiedene Istwerte verschiedener physikalischer Größen (Druck, Temperatur, Durchfluss, ...) der Anpassung des Regelparameters zugrunde gelegt werden, was zu einer genauen Adaption des Regelparameters führt.

Gemäß einer vorteilhaften Ausgestaltung umfasst die Optimierungseinheit ein künstliches neuronales Netz. Dieses künstliche neuronale Netz kann dabei sowohl ein einschichtiges Netz mit nur einer trainierbaren Neuronenschicht als auch ein mehrschichtiges oder vielschichtiges Netz mit mehreren trainierbare Neuronenschichten sein. Die Eingangssignale dieses neuronalen Netzes werden durch die Mehrzahl von Istwerten der physikalischen Größen des Fluides bereitgestellt, während das Ausgangssignal der Regelparameter ist. Der Aufwand der Ausgestaltung und der Implementierung eines solchen künstlichen neuronalen Netzes steigt mit der Anzahl von Eingangssignalen (Anzahl von Istwerten). Eine erhöhte Anzahl von Eingangssignalen führt allerdings wiederrum auch zu einer genaueren Berechnung des Regelparameters, so dass ein optimiertes Verhältnis angestrebt werden kann, um eine möglichst einfache Implementierung eines künstlichen Netzes mit möglichst genauer Berechnung des Regelparameters zu ermöglichen.

Bei dieser beispielhaften Ausgestaltung kann sich ferner der Vorteil ergeben, dass das neuronale Netz aus einer selbst entwickelten Prognose über den Prozessverlauf (Verschleiß, Lebensdauer, Temperaturverhalten, etc.) Regelparameter ausgibt, die sodann die herkömmliche Regelung verbessern können.

Anzumerken ist in diesem Zusammenhang, dass es in der Regelungstechnik durchaus bekannt ist, herkömmliche Regler durch künstliche neuronale Netze zu ersetzen. Im Rahmen der vorliegenden Offenbarung wird jedoch ein herkömmlicher Regler, wie z.B. ein PID-Regler nicht durch ein künstliches neuronales Netz ersetzt, sondern vielmehr ergänzt. Dies ermöglicht weiterhin die einfache Handhabe eines herkömmlichen Reglers, welcher allerdings zusätzlich mit Hilfe eines künstlichen neuronalen Netzwerks effizienter und stabiler geregelt wird.

Gemäß einer beispielhaften Ausführungsform umfassen die Istwerte der Mehrzahl von physikalischen Größen des Fluides den ersten Istwert. Dieser erste Istwert ist dabei der Istwert, der von der Regeleinheit empfangen und mit dem ersten Sollwert einer physikalischen Größe des Fluides verglichen wird. Die Istwerte der Mehrzahl von physikalischen Größen des Fluides können, wie bereits oben beschrieben, durch mehrere Sensoren gemessen und beispielsweise an zumindest einen Multiplexer übergeben werden. Dieser zumindest eine Multiplexer ist dazu ausgestaltet, einen Istwert dieser physikalischen Größen auszuwählen und eben diesen Istwert als ersten Istwert an die Regeleinheit der Regelvorrichtung zurückzuführen. Somit wird der Regelkreis geschlossen, indem ein gemessener Istwert als Eingangsgröße an die Regeleinheit zurückgeführt wird.

Gemäß einer weiteren beispielhaften Ausgestaltung ist die Optimierungseinheit dazu ausgestaltet, die beim Aktivieren der Regelvorrichtung resultierenden Anstiege der Istwerte der Mehrzahl von physikalischen Größen auszuwerten und den Regelparameter basierend auf dieser Auswertung anzupassen. Das Aktivieren der Regelvorrichtung kann zu sprunghaften Veränderungen der Istwerte (im Regelfall Anstiege) führen und ein stabiler Istwert, welcher annähernd dem vorgegebenen Sollwert entspricht, kann in der Regel erst nach einem kurzen Zeitintervall erreicht werden. Ein steiles Ansteigen des Istwerts (Allgemein: abrupte Veränderungen mit ausgeprägter Steilheit) beim Aktivieren der Regelvorrichtung kann zu einer kurzzeitig deutlich erhöhten Abweichung des Istwerts vom Sollwert führen. Dies wird bei dieser vorteilhaften Ausgestaltung berücksichtigt, indem die resultierenden Anstiege ausgewertet werden und der Regelparameter basierend auf dieser Auswertung angepasst wird. Gemäß einer beispielhaften Ausführungsform werden die beim Aktivieren der Regelvorrichtung resultierenden Anstiege (Veränderung) der Istwerte durch Zeitfenster ausgewertet. Erfolgt somit beispielsweise ein sehr rascher Anstieg des Istwerts, wird der Regelparameter insoweit angepasst, dass eine stärkere Nachregulierung der Stellgröße erfolgt.

Es versteht sich, dass im Rahmen der vorliegenden Offenbarung Veränderungen nicht nur positive Anstiege (positive Ableitung), sondern auch negative Anstiege (negative Ableitung Abstiege) umfassen können. Daher ist der Begriff Anstieg nicht einschränkend zu verstehen.

Gemäß einer weiteren beispielhaften Ausgestaltung ist die Optimierungseinheit ferner dazu ausgestaltet, nicht nur eine Mehrzahl von physikalischen Größen des Fluides in Form von Istwerten, sondern ebenso eine Mehrzahl von physikalischen Größen des Fluides in Form von Sollwerten zu erhalten, basierend auf diesen Sollwerten den Regelparameter anzupassen und diesen an die Regeleinheit zu übergeben.

Beispielhaft ist die Optimierungseinheit ferner dazu ausgestaltet, die erhaltenen Istwerte mit den erhaltenen Sollwerten der Mehrzahl von physikalischen Größen zu vergleichen und basierend auf diesen Vergleichen den Regelparameter anzupassen. Dies hat den Vorteil, dass der von der Optimierungseinheit ausgegebene Regelparameter bereits effizient durch einen Vergleich der Istwerte und Sollwerte abgestimmt ist. Dies führt schlussendlich zu einer noch besseren Berechnung der Stellgröße durch die Regeleinheit.

Beispielhaft umfassen die Sollwerte den ersten Sollwert, der von der Regeleinheit empfangen und für den Vergleich mit dem ersten Istwert verwendet wird. Somit ist zunächst die Regeleinheit dazu ausgestaltet, den ersten Istwert und den ersten Soll-wert zu vergleichen und, basierend auf diesem Vergleich, eine Stellgröße zu berechnen und auszugeben. Ferner ist allerdings auch die Optimierungseinheit dazu ausgestaltet, diesen ersten Istwert und den ersten Sollwert zu empfangen und diese zu vergleichen. Basierend auf diesem Vergleich kann somit ein optimierter Regelparameter an die Regeleinheit übergeben werden. Ein Vergleich von Istwerten und Sollwerten findet somit nicht nur in der Regeleinheit statt, sondern ebenso in der Optimierungseinheit, wodurch eine noch effizientere Regelung erreicht werden kann.

Beispielsweise nutzt die Optimierungseinheit zunächst vorgegebene Sollwerte, bzw. stellt diese bereit. Dies ermöglicht eine schnelle Regelung des Regelkreises direkt nach dem Aktivieren der Regelvorrichtung. D. h. mit anderen Worten, es können global vorgegebene Regelparameter genutzt werden, auf deren Basis die Regelvorrichtung in Betrieb genommen werden kann. Sodann kann auf dieser Basis die adaptive Anpassung/Optimierung der Regelparameter erfolgen.

Gemäß einer weiteren beispielhaften Ausgestaltung ist die Optimierungseinheit dazu ausgestaltet, die erhaltenen Istwerte mit vorgegebenen Sollwertbereichen zu vergleichen und den Regelparameter basierend auf diesen Vergleichen anzupassen. Das Aktivieren der Regelvorrichtung bringt beispielsweise Anstiege (allgemeiner: Änderungen) der Istwerte der Mehrzahl von physikalischen Größen mit sich, und es bedarf womöglich einiger Zeit und Nachregelung, bis die Abweichung des Istwerts vom Sollwert hinreichend reduziert ist. Durch die Verwendung von vorgegebenen Sollwertbereichen anstatt von vorgegebenen Sollwerten kann erreicht werden, dass kurze Zeit nach dem Aktivieren der Regelvorrichtung ein deutliches Überschwingen und Unterschwingen des Istwerts im Vergleich zum Sollwert verhindert wird.

Gemäß einer weiteren beispielhaften Ausgestaltung ist die Optimierungseinheit ferner dazu ausgestaltet, die erhaltenen Istwerte mit Sollwerten zu vergleichen, welche durch Variationen modifiziert wurden, wobei die modifizierten Sollwerte im vorgegebenen Sollwertbereich liegen. Diese Variationen können beispielsweise kleine Sprünge umfassen. Beispielsweise liegen die modifizierten Sollwerte im vorgegebenen Sollwertbereich, so dass der Betrieb des Ventils bzw. des Aktuators nicht oder nur gering in nachteiliger Weise beeinflusst wird. Diese kleinen Sprünge können durch das künstliche neuronale Netz ausgewertet werden. Auf diese Weise wird eine optimierte Berechnung des Regelparameters ermöglicht. Das Regelsystem ist in der Lage, auf kleine Variationen, welche z.B. ebenso durch Umwelteinflüsse entstehen können, effizient zu reagieren.

Gemäß einer Ausgestaltung wird die Variation gezielt eingebracht, also gezielt induziert oder aufgeprägt. Mit anderen Worten ist es vorstellbar, bewusst einen kleinen Fehler aufzuprägen, um eine adaptive Anpassung des Regelparameters unter Nutzung des neuronalen Netzwerks zu veranlassen. Auf diese Weise kann die Optimierungseinheit trainiert werden. Wesentlich ist hier, dass das Gesamtsystem gleichwohl auch ohne großen Trainingsaufwand operativ nutzbar ist.

Die Variation kann Sollwerte und/oder Istwerte betreffen. Mit anderen Worten wird ein (kleiner) Fehler induziert. Das Soll-Wert Delta ist kleiner als der erlaubte Abweichungsbereich. Damit wird Funktion sichergestellt und ein Überschwingen vermieden.

Die neuronalen Faktoren des künstlichen neuronalen Netzes können über Regressionsalgorithmen optimiert werden, zumindest gemäß beispielhafter Ausgestaltungen. Dies kann beispielhaft über das beschriebene Signalverhalten bei kleinen Variationen unter Beobachtung des Regelergebnisses erreicht werden. Eine alternative oder zusätzliche Option für die Optimierung der neuronalen Faktoren ist eine isolierte Trainingsphase bzw. ein Einlernen der Regelstrecke. Wie vorstehend bereits dargelegt, ist es jedoch in zumindest beispielhaften Ausführungsformen von Interesse, auf derartige Phasen vor dem eigentlichen operativen Betrieb zu verzichten, diese Phasen zumindest zu minimieren.

Gemäß einer weiteren beispielhaften Ausführungsform ist die Optimierungseinheit dazu ausgestaltet, die vorgegebenen Sollwerte und/oder die vorgegebenen Sollwertbereiche basierend auf den erhaltenen Istwerten adaptiv anzupassen. Dies hat den Vorteil, dass das Regelsystem effizienter die Abweichungen des Istwerts von dem Sollwert minimieren kann. Weiterhin kann dadurch vermieden werden, dass das Regelsystem versucht, einen nicht erreichbaren Sollwert durch kontinuierliche Nachregelung zu erreichen. Somit befindet sich der Regelkreis deutlich schneller im Gleichgewicht bzw. in einem hinreichend stabilen Zustand.

Gemäß einer weiteren Ausgestaltung ist die Optimierungseinheit dazu ausgestaltet, einen vorgegebenen Regelparameter als Ursprungswert für die Anpassung des Regelparameters zugrunde zu legen. Dies hat den entscheidenden Vorteil, dass die Optimierungseinheit bzw. das künstliche neuronale Netz nicht vortrainiert werden muss. Mit anderen Worten muss gemäß dieser beispielhaften Ausführungsform nicht "von Grund auf" bzw. "von Null an" trainiert werden.

Stattdessen können beim Aktivieren der Regelvorrichtung bereits Regelparameter vorgegeben sein, welche einen operativen Einsatz erlauben. Diese Regelparameter können beispielsweise auf empirischen Datensätzen beruhen. Somit ist die Optimierungseinheit in der Lage, direkt nach dem Aktivieren der Regelvorrichtung einen vorgegebenen Regelparameter anzupassen und diesen an die Regeleinheit zu übergeben. Der angestrebte Zustand kann schneller erreicht werden.

Die Bereitstellung eines vorgegebenen Regelparameters bzw. eines Parametersatzes kann sich einerseits auf eine Erstaktivierung/Inbetriebnahme und andererseits auf eine erneute Aktivierung nach schon erfolgter Erstaktivierung beziehen. Mit anderen Worten, bei der Erstaktivierung können global vorgegebene Regelparameter genutzt werden. Bei der wiederholten/erneuten Aktivierung können beim vorherigen Betrieb der Regelvorrichtung bereits angepasste Regelparameter genutzt werden.

Gemäß einer weiteren Ausgestaltung ist die Regeleinheit ein Kaskadenregler mit mehreren kaskadiert angeordneten Reglern. Die Verknüpfung bzw. Verschachtelung zugehöriger Regelkreise kann für eine deutlich erhöhte Regelgüte sorgen. Dies betrifft besonders das dynamische Verhalten des Regelkreises bei Störeinflüssen.

Weitere Vorteile und beispielhafte Ausgestaltungen ergeben sich aus der folgenden Beschreibung und den beigefügten Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Ausführungsbeispiele der Offenbarung sind in den beigefügten Zeichnungen dargestellt und werden in der nachfolgenden Beschreibung näher erläutert. Es zeigen:
- Fig. 1: in schematischer Darstellung eine beispielhafte Ausführungsform eines konventionellen Regelsystems zur Regelung einer physikalischen Größe eines Fluides;
- Fig. 2A: in schematischer Darstellung eine beispielhafte Ausführungsform eines Regelsystems mit einer Regelvorrichtung zur Regelung einer physikalischen Größe eines Fluides gemäß einer Ausgestaltung der vorliegenden Offenbarung;
- Fig. 2B: in schematischer Darstellung eine Regelvorrichtung zur Regelung einer physikalischen Größe eines Fluides gemäß einer Ausgestaltung der vorliegenden Offenbarung;
- Fig. 3: in schematischer und vereinfachter Prinzipdarstellung ein künstliches neuronales Netz zur Veranschaulichung offenbarungsgemäßer Aspekte;
- Fig. 4: eine schematische, stark vereinfachte Darstellung einer beispielhaften Kennlinie eines Ventils, welches durch eine offenbarungsgemäße Regelvorrichtung angesteuert wird;
- Fig. 5: eine weitere Darstellung einer Kennlinie eines Ventils auf Basis der Darstellung gemäß Fig. 4, zur Veranschaulichung aufgeprägter Variationen, und
- Fig. 6: eine schematische Darstellung eines Blockdiagramms zur Veranschaulichung einer beispielhaften Anwendung einer Regelvorrichtung gemäß einer Ausgestaltung der vorliegenden Offenbarung.

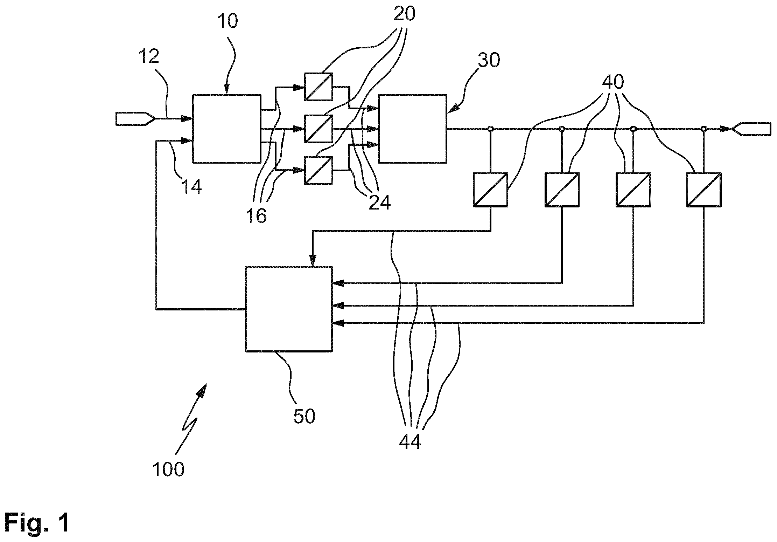

Fig. 1 zeigt eine schematische Darstellung eines insgesamt mit 100 bezeichneten Regelsystems zur Regelung einer physikalischen Größe eines Fluides. Das System 100 umfasst zumindest eine Regeleinheit 10, mehrere Aktuatoren 20, eine Regelstrecke 30, mehrere Sensoren 40 sowie einen Multiplexer 50. Das System 100 ist konventionell gestaltet.

Die Regeleinheit 10 ist beispielsweise ein PID-Regler. Ein solcher PID-Regler ist der universellste der klassischen Regler, da er die positiven Eigenschaften der anderen Regler (P-Regler, I-Regler, PI-Regler, PD-Regler) vereint. Somit sind PID-geregelte Regelkreise in der Regel genau und sehr schnell. Es versteht sich, dass andere Regler-Typen und Kombinationen daraus verwendbar sind.

Fig. 1 veranschaulicht, dass die Regeleinheit 10 zumindest zwei Eingänge aufweist. Durch diese Eingänge erhält die Regeleinheit 10 der gezeigten Ausgestaltung einen ersten Sollwert 12 sowie einen ersten Istwert 14 einer physikalischen Größe eines Fluides. Es handelt sich beispielsweise um den Druck, die Temperatur oder dergleichen. Die Regeleinheit 10 ist dazu ausgestaltet, den ersten Istwert 14 und den ersten Sollwert 12 zu vergleichen und, basierend auf diesem Vergleich, eine Stellgröße 16 zu berechnen und auszugeben. Dabei können, wie in Fig. 1 zu sehen, auch mehrere Stellgrößen 16 ausgegeben werden. Es versteht sich, dass neben dem ersten Sollwert 12 und dem ersten Istwert 14 auch weitere Paare von Sollwerten und Istwerten berücksichtigt werden können, welche andere physikalische Größen repräsentieren.

Die Stellgrößen 16 werden an verschiedene Aktuatoren 20 übergeben. Diese Aktuatoren 20 sind dazu ausgestaltet, die von der Regeleinheit 10 ausgegebenen Stellgrößen 16 zu empfangen und einen oder mehrere physikalische Größen des Fluides basierend auf den empfangenen Stellgrößen 16 zu verändern. Somit werden durch die Aktuatoren 20 Signale (Stellgrößen 16) in mechanische Bewegungen bzw. Veränderungen physikalischer Größen wie Druck oder Temperatur umgesetzt. Bei den Stellgrößen 16 kann es sich um elektrische/digitale Signale handeln. Ein Aktuator 20 kann beispielsweise Bestandteil eines Ventils sein, insbesondere dessen Antrieb. Demgemäß kann es sich bei dem Aktuator 20 beispielsweise um ein Stellglied in Form eines Elektromagneten handeln, der entsprechend bestromt wird. Dies ist nicht einschränkend zu verstehen. Es versteht sich, dass ein und derselbe Aktuator 20 auch mit mehreren Stellgrößen 16 versorgt werden kann. Der Aktuator 20 kann auch als Stellglied bezeichnet werden. Bei der Stellgröße 16 können sich beispielhaft um ein PWM-Signal oder ein ähnliches moduliert ist Signal zur Ansteuerung eines Elektromagneten handeln.

Aus der Ansteuerung der Aktuatoren 20 resultierende Regelgrößen 24 beeinflussen eine Regelstrecke 30. Beispielsweise kann es sich bei einer der Regelgrößen 24 um einen Hub eines Elektromagneten zur Ventilsteuerung handeln. Beispielsweise handelt es sich bei einer der Regelgrößen um einen aus dem PWM-Signal resultierenden Öffnungsgrad des Ventils.

Die Regelstrecke 30 ist im gezeigten Ausführungsbeispiel mit mehreren Sensoren 40 gekoppelt, zumindest aber mit einem Sensor 40. Der oder die Sensoren 40 sind dazu ausgestaltet, Istwerte 44 der physikalischen Größen des Fluides zu messen (Druck, Temperatur, Durchfluss, etc.). Die Messung kann mittelbar oder unmittelbar erfolgen. Gemessene Istwerte 44 der verschiedenen physikalischen Größen können an einen Multiplexer 50 übergeben werden. Dieser Multiplexer 50 ist dazu ausgestaltet, die gemessenen Istwerte 44 zu empfangen, einen Istwert der physikalischen Größen auszuwählen und diesen Istwert als ersten Istwert 14 an die Regeleinheit 10 zurückzuführen. Somit wird durch die Zurückführung dieses ersten Istwerts 14 der Regelkreis geschlossen. Es versteht sich, dass auch Ausführungsformen ohne einen Multiplexer 50 vorstellbar sind. Anders gesagt kann der Multiplexer 50 auch als Hilfsmittel für die Darstellung der Handhabung mehrerer paralleler Größen/Signale verstanden werden.

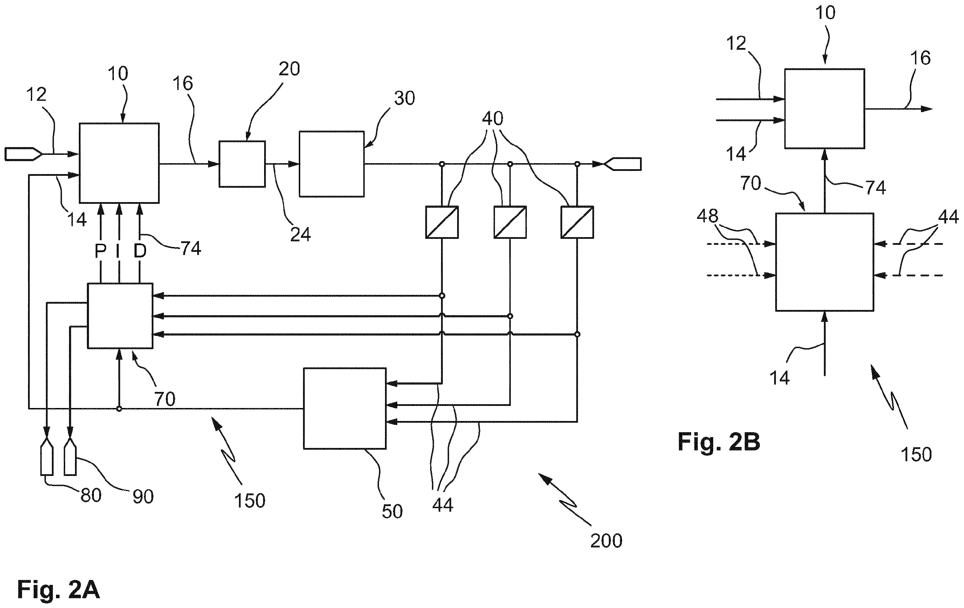

Im Rahmen der vorliegenden Offenbarung wird vorgeschlagen, den grundsätzlichen Aufbau des Regelsystems 100 gemäß Fig. 1 zu ergänzen, vergleiche die Figuren 2A ff. Hinsichtlich der Grundstruktur wird jedoch auf die in Fig. 1 veranschaulichte und vorstehend beschriebene Gestaltung verwiesen.

Fig. 2A zeigt eine schematische Darstellung eines Regelsystems 200 zur Regelung einer physikalischen Größe eines Fluides gemäß einer Ausgestaltung der vorliegenden Offenbarung. Im Gegensatz bzw. in Ergänzung zu der in Fig. 1 veranschaulichten Ausgestaltung weist das Regelsystem 200 beispielhaft ergänzend eine Optimierungseinheit 70, ein lokales Diagnosemodul 80 und eine Cloud 90 (über Netzwerk eingebundener Speicher und/oder Server und dergleichen) auf. Es versteht sich, dass nicht zwingend jedes der Elemente 50, 70, 80 und 90 vorgesehen sein muss. Zum eigentlichen Regelblock (vgl. die Elemente 10, 16, 20, 24 und 30) wird erneut auf Fig. 1 und die zugehörigen Erläuterungen verwiesen.

Wie bereits unter Bezugnahme auf Fig. 1 erläutert, sind die Sensoren 40 dazu ausgestaltet, die Istwerte 44 der physikalischen Größen des Fluides zu messen und an den Multiplexer 50 zu übergeben. Der Multiplexer 50 empfängt die gemessenen Istwerte 44, wählt einen Istwert aus und führt diesen Istwert als ersten Istwert 14 im Sinne einer Rückkopplung an die Regeleinheit 10 zurück. Der erste Istwert 14 wird im Ausführungsbeispiel nicht nur an die Regeleinheit 10 zurückgeführt, sondern über eine Abzweigung ebenso an die Optimierungseinheit übermittelt. Ebenso liegt bei der Regeleinheit 10 ein dem ersten Istwert 14 zugeordneter erster Sollwert 12 vor. Bei mehreren Wertepaaren werden mehrere Sollwerte 12 zugeführt.

Die Optimierungseinheit 70 erhält somit ebenso den ersten Istwert 14. Ergänzend weist die Optimierungseinheit 70 Eingänge auf, um zusätzlich die Mehrzahl der Istwerte 44 der physikalischen Größen des Fluides zu erhalten. Die Istwerte 44 können damit von der Optimierungseinheit 70 berücksichtigt werden.

Ferner ist diese Optimierungseinheit 70 in dem in Fig. 2A veranschaulichten Ausführungsbeispiel mit einem lokalen Diagnosemodul 80 sowie einer Cloud 90 verbunden. Auf diese Weise können Informationen wie Diagnosedaten, etc. ausgegeben werden. Beispielhaft können im Rahmen der vorbeugenden Wartungsdiagnostik Daten an das Diagnosemodul 80 und/oder die Cloud 90 übermittelt werden, wenn sich die von der Optimierungseinheit 70 bereitgestellten Regelparameter oder andere verarbeitete Größen über einen Zeitraum stärker als erwartet ändern. Eine solche Meldung kann über die Cloud 90 an einen entfernten Dienstanbieter und/oder an das lokale Diagnosemodul 80 erfolgen. Es versteht sich, dass das Diagnosemodul 80 und die Cloud 90 lediglich zu Veranschaulichungszwecken schematisch angedeutet sind. Diese Ausgestaltung ist nicht einschränkend zu verstehen.

Anzumerken ist erneut, dass auch Ausführungsformen ohne den Multiplexer 50 vorstellbar sind. In einer entsprechenden Ausgestaltung muss dafür Sorge getragen werden, dass die verschiedenen Kanäle (mehrere Sensoren 40 zur Bereitstellung mehrerer Istwerte 44) verarbeitet und der Optimierungseinheit 70 sowie der Regeleinheit 10 zugeführt werden können.

Fig. 2B zeigt in schematischer Darstellung eine Regelvorrichtung 150 zur Regelung einer physikalischen Größe eines Fluides gemäß einer beispielhaften Ausgestaltung der vorliegenden Offenbarung. Die Regelvorrichtung 150 kann Bestandteil des Regelsystems 200 gemäß Fig. 2A sein.

Die Optimierungseinheit 70 ist dazu ausgestaltet, zumindest eine physikalische Größe des Fluides in Form eines Istwerts (bzw. verkörpert durch einen Istwert) als ersten Istwert 14 zu erhalten. Basierend auf dem ersten Istwert 14 wird ein Regelparameter 74 angepasst, sofern Optimierungspotenzial gegeben ist, und an die Regeleinheit 10 übergeben.

Beispielsweise ist die Optimierungseinheit 70 dazu ausgestaltet, einen vorgegebenen/vordefinierten Regelparameter als Ursprungswert für die Anpassung des Regelparameters 74 zugrunde zu legen. Somit ist beispielsweise ein vorgegebener Regelparameter 74 bereits in der Optimierungseinheit 70 und/oder der Regeleinheit 10 vorgespeichert. Dies muss nicht nur einen einzelnen Regelparameter 74 betreffen. Es kann ein Regelparametersatz betroffen sein. In ähnlicher Weise wird die in dem in Fig. 1 veranschaulichten konventionellen Regelsystem 100 gezeigte Regeleinheit 10 mit einem Regelparameter oder einem Regelparametersatz versorgt. Ein wesentlicher Unterschied besteht darin, dass das Regelsystem 100 gemäß Fig. 1 nicht dazu ausgebildet ist, den Regelparameter oder den Regelparametersatz anzupassen bzw. zu optimieren.

Der vorgegebene Regelparameter 74 kann z.B. über die Cloud 90 oder über andere nicht gezeigte lokale Schnittstellen auf die Optimierungseinheit 70 übertragen werden, vergleiche hierzu Fig. 2A. Dies hat den entscheidenden Vorteil, dass der Regelkreis nicht in einem komplett untrainierten Zustand beginnt. Somit wird für den Ursprungswert des Regelparameters beispielsweise ein empirisch bestimmter Wert zugrunde gelegt. Es ist auch vorstellbar, den vorgegebenen Regelparameter im Rahmen eines Versuchsbetriebs des Regelsystems 200 zu ermitteln.

Als vorgegebener Regelparameter kann auch ein bereits optimierter Regelparameter (oder ein entsprechender Satz) verwendet werden, wenn das Regelsystem 200 nach erfolgter Erstinbetriebnahme später erneut aktiviert und in Betrieb genommen wird. Ein solcher vorgegebener Regelparameter (oder ein entsprechender Satz) wurde dann womöglich bereits in einem früheren Betrieb des Regelsystems 200 optimiert. Daher eignet er sich als Grundlage für die fortlaufende Optimierung im weiteren Betrieb.

In Ergänzung zu dem Erhalt des ersten Istwerts 14, kann die Regelvorrichtung 150 weiterhin dazu ausgestaltet sein, zusätzlich eine Mehrzahl von physikalischen Größen des Fluides in Form von Istwerten 44 und/oder in Form von Sollwerten 48 zu erhalten. Entsprechende Signale können über eine oder mehrere Eingänge zugeführt werden. Beispielsweise umfassen die mehreren Istwerte 44 auch den ersten Istwert 14 (wie vom Multiplexer bereitgestellt). Gemäß dieser beispielhaften Ausgestaltung ist die Optimierungseinheit 70 nicht nur dazu ausgestaltet, den ersten Istwert 14 der Anpassung/Optimierung des Regelparameters 74 zugrunde zu legen, sondern den Regelparameter 74 ferner basierend auf der Mehrzahl der Istwerte 44 sowie der Mehrzahl der Sollwerte 48 anzupassen.

Die Optimierungseinheit 70 umfasst beispielsweise ein künstliches neuronales Netz. Das künstliche neuronale Netz bestimmt einen Regelparameter oder einen Regelparametersatz für die adaptive Regelung einer Regeleinheit 10.

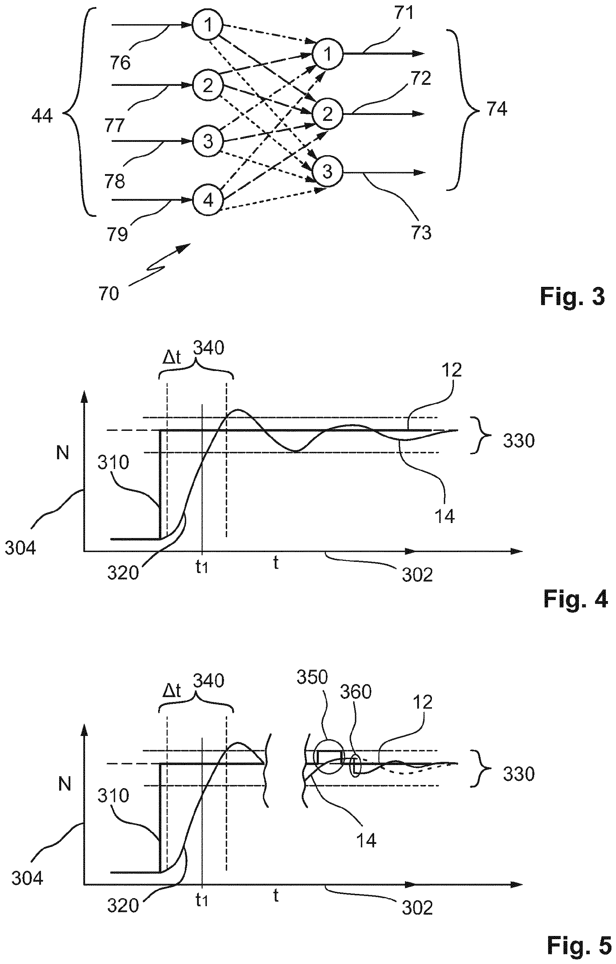

Fig. 3 zeigt in schematischer und vereinfachter Darstellung eine beispielhafte Ausgestaltung eines solchen künstlichen neuronalen Netzes, das von der Optimierungseinheit 70 genutzt wird. Das künstliche neuronale Netz besitzt mehrere Eingänge (hier: vier Eingänge 76, 77, 78, 79) für Eingangsgrößen bzw. Eingangssignale, welche gemäß der vorliegenden Offenbarung durch einen oder mehrere Istwerte 44 bereitgestellt werden. Zusätzlich können die Eingangssignale auch ein oder mehrere Sollwerte 48 sein. Das neuronale Netz weist ferner zumindest einen Ausgang (hier: 3 Ausgänge) für Ausgangsgrößen bzw. Ausgangssignale auf.

Zum regelungstechnischen Hintergrund und zur Funktion und Gestaltung neuronaler Netze in Zusammenhang mit Regelkreisen wird ergänzend auf die DE 197 48 718 A1 und die dortigen Literaturstellen verwiesen.

Neuronale Netze lassen sich auch als Matrizen (beispielsweise Gewichtsmatrix) darstellen. Beispielsweise lässt sich ein neuronales Netz durch eine Gewichtsmatrix darstellen, wobei sich deren Dimension aus der Anzahl der Eingänge (Input-Units) und der Anzahl der Ausgänge (Output-Units) ergibt. Deren Anzahl legt die erforderliche Anzahl an Zeilen und Spalten fest, auf dieser Basis ergibt sich die Dimension. Sofern das neuronale Netz zwischen der Eingangs-Schicht und der Ausgangs-Schicht weitere Schichten (sogenannte Hidden-Schichten) aufweist, erhöht sich die Anzahl der Matrizen, die zur Darstellung des neuronalen Netzes nötig sind. Mit anderen Worten kann ein neuronales Netz auch als n-dimensionale Matrix bezeichnet werden, wobei sich deren Dimension n aus der Anzahl der Eingänge und Ausgänge ergibt.

Basierend auf den Eingangsgrößen wird eine Ausgangsgröße bereitgestellt. Gemäß der vorliegenden Offenbarung ist diese Ausgangsgröße der optimierte Regelparameter 74 oder ein entsprechender Satz von Regelparametern. Drei Ausgangssignale 71, 72, 73 gehen im gezeigten Ausführungsbeispiel in den Regelparametersatz bzw. Regelparameter 74 ein. Gemäß einer beispielhaften Ausführungsform handelt es sich bei der Regeleinheit 10, welche den vom künstlichen neuronalen Netz ausgegebenen Regelparameter 74 erhält, um einen PID-Regler. Die Ausgangssignale 71, 72, 73 können somit jeweils den P-Anteil, I-Anteil und D-Anteil eines Regelparametersatzes repräsentieren.

Fig. 4 zeigt eine schematische, stark vereinfachte Darstellung einer Kennlinie eines Ventils im operativen Betrieb, wobei das Ventil durch eine offenbarungsgemäße Regelvorrichtung 150 (vergleiche Figur 2A) angesteuert wird. Demgemäß bildet das Ventil einen Bestandteil der Regelstrecke 30. Die Kennlinie wird in einem Koordinatensystem mit Achsen 302, 304 dargestellt. Auf der Ordinate 304 ist eine physikalische Größe N dargestellt, welche beispielsweise der Druck oder die Temperatur des geregelten Fluides sein kann. Die Zeit t ist auf der Abszisse 302 dargestellt. Somit zeigt die dargestellte Kennlinie den Verlauf einer physikalischen Größe des Fluides in Abhängigkeit von der Zeit. Beispielhaft handelt es sich bei der vorliegenden Darstellung um den Zeitverlauf der physikalischen Größe des Fluides nach dem Aktivieren der Regelvorrichtung 150. Der Begriff Aktivierung kann eine Erstaktivierung oder eine erneute Aktivierung (nach zwischenzeitlicher Deaktivierung) der Regelvorrichtung 150 betreffen.

Die Kennlinie umfasst eine Sollwertkurve 310 und eine Istwertkurve 320. Die Sollwertkurve 310 repräsentiert den ersten Sollwert 12 und die Istwertkurve 320 repräsentiert den ersten Istwert 14. Das Aktivieren der Regelvorrichtung 150 führt zu einer Sprungerregung des Sollwerts 12 auf das gewünschte Soll-Niveau. Somit ist die Sollwertkurve 310 als Stufenfunktion dargestellt. Die Sprungerregung bzw. die folgende Sprungantwort kann zur Optimierung der Regelparameter durch die Optimierungseinheit 70 genutzt und ausgewertet werden.

Die Istwertkurve 320 steigt nach dem Aktivieren der Regelvorrichtung 150 an, wobei im gezeigten Ausführungsbeispiel der steile Anstieg zu Beginn mit Hilfe eines Zeitfensters 340 ausgewertet wird. Im weiteren Zeitverlauf pendelt der erste Istwert 14 um den Ziel-Wert für den ersten Sollwert 12, wobei sich der Istwert 14 im Idealfall immer weiter an den Sollwert 12 annähert. Es versteht sich, dass die in Figur 4 gezeigte Kennlinie lediglich beispielhafter Natur ist. Auch bei einem anderen Verlauf können die Sprungerregung bzw. die Sprungantwort für die Optimierung und Anpassung der Regelparameter genutzt werden. Ein Ziel der Regelung kann darin bestehen, den Istwert 14 innerhalb eines erlaubten Bereichs 330 zu halten.

Die ergänzende Darstellung in Fig. 5 baut auf der Darstellung in Fig. 4 auf. Zumindest in beispielhaften Ausführungsformen ist es vorstellbar, dass den ersten Sollwert 12 beschreibende Signal 310 (vergleiche Detail bei 350) bzw. das den Istwert 14 beschreibende Signal 320 (vergleiche Detail bei 360) bewusst zu variieren, um die Optimierungseinheit 70 zu trainieren. So ist es vorstellbar, kleine Sprünge (Abschnitt 350) des ersten Sollwert 12 aufzuprägen, um die sich anschließenden Regelvorgänge für das Training der Optimierungseinheit 70 und folglich die Anpassung des zumindest einen Regelparameters zu verwenden. Grundsätzlich ist es auch vorstellbar, kleine Sprünge (Abschnitt 360) des ersten Istwerts 14 aufzuprägen, um die sich anschließenden Regelvorgänge für das Training der Optimierungseinheit 70 und folglich die Anpassung des zumindest einen Regelparameters zu verwenden. Mit anderen Worten wird der erste Istwert 14 gemäß dieser Ausführungsform zumindest zeitweise bewusst "falsch" zurückgemeldet.

Sofern auf kleine Variationen des Sollwerts 12 (alternativ des Istwerts 14) zurückgegriffen wird, um die Optimierungseinheit 70 zu trainieren, können die Variationen so gewählt werden, dass der Bereich 330 trotz bewusst eingebrachter "Fehler" nicht verlassen wird. Auf diese Weise wird sichergestellt, dass das Training der Optimierungseinheit 70 nicht zu unerwünschten Betriebszuständen des Gesamtsystems führt. Demgemäß kann es angebracht sein, zumindest in beispielhaften Ausgestaltungen, nur verhältnismäßig kleine Variationen der Signalverläufe für Sollwert 12 und/oder Istwert 14 vorzunehmen.

Es versteht sich, dass die Signalverläufe und insbesondere die Variationen bei 350, 360 in Fig. 5 lediglich exemplarischer Natur sind und vorrangig dazu dienen, beispielhafte Aspekte der vorliegenden Offenbarung zu veranschaulichen.

Gemäß der vorliegenden Offenbarung erhält die Optimierungseinheit 70 den ersten Istwert 14 (bzw. diesen beschreibende Signale) und passt basierend auf diesem ersten Istwert 14 einen Regelparameter 74 an, welcher an die Regeleinheit 10 der Regelvorrichtung 150 übergeben wird. Ein Auswertefenster 340 definiert einen Zeitraum, welcher der Betrachtung zugrunde gelegt wird. In dem Ausführungsbeispiel gemäß Fig. 4 deckt das Auswertefenster 340 einen Abschnitt, insbesondere einen Großteil, der ersten ansteigenden Flanke der Istwertkurve 320 ab. Es versteht sich, dass das Auswertefenster 340 anderweitig definiert sein kann. Der oder die optimierten Regelparameter 74 werden der Regeleinheit 10 zugeführt.

Die Regeleinheit 10 ist dazu ausgestaltet, die Berechnung der Stellgröße 16 basierend auf dem Regelparameter 74 zu optimieren, um eine angepasste Stellgröße auszugeben. Die optimierte Stellgröße 16 veranlasst wiederrum eine Zustandsänderung beim Aktuator 20 bzw. dem diesen umfassenden Ventil, um den Istwert 14 der physikalischen Größe des Fluides zu ändern. Somit sorgt der von der Optimierungseinheit 70 an die Regeleinheit 10 übergebene Regelparameter 74 in grundsätzlich zuvor schon beschriebener Weise dafür, dass der in Fig. 4 gezeigt erste Istwert 14 sich nach kurzer Zeit nahe dem ersten Sollwert 12 einpendelt. Zusätzlich wird das Regelverhalten für die Anpassung der Regelparameter 74 verwendet.

Mit anderen Worten kann die Optimierungseinheit 70 den Regelparameter 74 auf Basis des ersten Istwerts 14 bzw. des diesen verkörpernden Signals anpassen. Dies umfasst beispielsweise auch eine spezifische Betrachtung und Auswertung einer Sprungantwort beim Aktivieren der Regelvorrichtung 150 in Reaktion auf einen Sollwert-Sprung. Dieser Kurvenabschnitt/Signalverlauf wird beispielsweise mit Hilfe von Zeitfenstern 340 ausgewertet.

In einer beispielhaften Ausführungsform ist die Optimierungseinheit 70 dazu ausgestaltet sein, den Regelparameter 74 basierend auf einem Vergleich des ersten Istwert 14 und des ersten Sollwerts 12 anzupassen.

In einer beispielhaften Ausführungsform ist die Optimierungseinheit 70 dazu ausgestaltet, den Regelparameter 74 basierend auf einem Vergleich des ersten Istwerts 14 mit einem Sollwertbereich 330 anzupassen.

In einer beispielhaften Ausführungsform ist die Optimierungseinheit 70 dazu ausgestaltet, den ersten Sollwert 12 mit einem modifizierten ersten Istwert 14 zu vergleichen. In einer weiteren beispielhaften Ausgestaltung ist die Optimierungseinheit 70 dazu ausgestaltet, den erhaltenen ersten Sollwert 12 mit einem modifizierten ersten Istwert 14 zu vergleichen. Mit anderen Worten ist es vorstellbar, bewusst kleine Fehler/Variationen aufzuprägen, um die Optimierungseinheit 70 zu trainieren. Es ist vorstellbar, den Sollwert 12 innerhalb grundsätzlich tolerierter Grenzen (vergleiche etwa Sollwertbereich 330) zu variieren, um eine Systemantwort zu provozieren. Dies wird in Figur 4 durch eine gestrichelte Linie 350 veranschaulicht. Sich ergebende resultierende Änderungen beim Istwert 14 können für die weitere Optimierung der Regelparameter genutzt werden.

Im Rahmen der vorliegenden Offenbarung ist von einem ersten Sollwert und einem ersten Istwert die Rede. Dies ist so zu verstehen, dass andere Ausführungsbeispiele mehrere Sollwerte und/oder Istwerte verwenden können. Jedoch wurde aus Veranschaulichungsgründen auf möglichst einfache Beispiele zurückgegriffen.

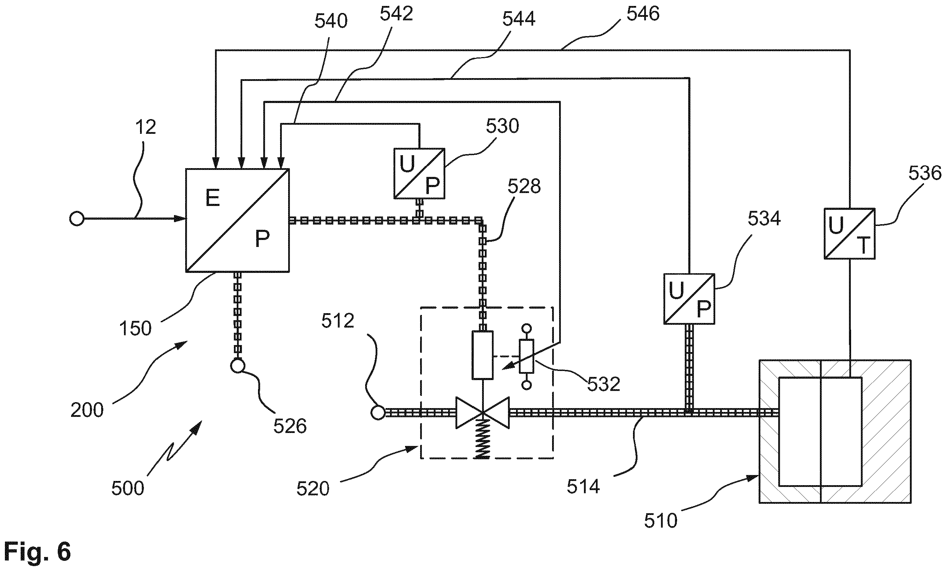

Fig. 6 veranschaulicht in schematischer Darstellung anhand eines Blockschaltplans einer Anlage 500 eine beispielhafte Implementation eines Regelsystems 200 mit einer Regelvorrichtung 150 gemäß der vorliegenden Offenbarung. Das Anwendungsbeispiel bezieht sich auf eine Fertigungsanlage zur Verarbeitung von Partikelschaum, beispielsweise von expandiertem Polypropylen (EPP), expandiertem Polystyrol (EPS), etc. Mit solchen Anlagen können Formteile unterschiedlichster Gestaltung hergestellt werden.

Die Anlage 500 umfasst eine Form 510, die auch als Schäumform bezeichnet werden kann. In der Form 510 werden Bauteile aus dem Partikelschaum-Material hergestellt. Hierzu ist es erforderlich, die Form 510 mit Heißdampf zu versorgen. Dies erfolgt ausgehend von einer Quelle 512 über eine Leitung 514. Zur Dampfregelung ist ein Dampfregelventil 520 vorgesehen. Das Dampfregelventil 520 gemäß dem in Fig. 6 gezeigten Ausführungsbeispiel ist pilotgesteuert. Mit anderen Worten ist ein Pilotventil vorgesehen, welches Bestandteil des Regelsystems 200 mit der Regelvorrichtung 150 ist. Das Pilotventil (in Fig. 6 nicht explizit dargestellt) bildet den Aktuator bzw. umfasst den Aktuator des Regelsystems 200 (vergleiche Aktuator 20 in Fig. 2A).

In dem Ausführungsbeispiel umfasst die Pilotsteuerung die Bereitstellung eines Pilotdrucks. Als Fluid wird Druckluft verwendet, welche über eine Druckluftquelle 526 und eine Druckluftleitung 528 bereitgestellt wird. Das Pilotventil (nicht dargestellt) geregelt über die Druckluftleitung 528 den Pilotdruck. Auf diese Weise kann das Dampfregelventil 520 zur Versorgung der Form 510 angesteuert werden.

Relevante Prozessparameter für diesen Vorgang werden über Sensoren 530, 532, 534, 536 abgegriffen. Beispielsweise handelt es sich bei dem Sensor 530 um einen Drucksensor für den Pilotdruck. Der Sensor 530 koppelt an die Druckluftleitung 528 an. Beispielsweise handelt es sich bei dem Sensor 532 um einen Wegsensor zur Erfassung der Stellung/Position eines Stellgliedes des Dampfregelventils 520. Beispielhaft handelt es sich bei dem Sensor 534 um einen Drucksensor zur Erfassung des Dampfdrucks des Heißdampfs. Der Sensor 534 koppelt an die Leitung 514 an. Beispielhaft handelt es sich bei dem Sensor 536 um einen Temperatursensor zur Erfassung der Temperatur des Heißdampfs. Im Ausführungsbeispiel koppelt der Sensor 536 an die Form 510 an, um die Temperatur in deren Kavität zu ermitteln.

Die Sensoren 530, 532, 534, 536 stellen Signale 540, 542, 544, 546 bereit, die von der Regelvorrichtung 150 ausgewertet und der Regelung zugrunde gelegt werden. Damit stellen die Signale 540, 542, 544, 546 Istwerte dar und/oder fließen in Istwerte ein. Als Sollgröße bzw. Sollwert 12 dient im Ausführungsbeispiel die Dampfmenge, die in die Form 510 eingebracht werden soll. Es versteht sich, dass auch Sollwerte für die konkret über die Sensoren 530, 532, 534, 536 rückgemeldeten Istwerte vorgegeben sein können. Die Signale 540, 542, 544, 546 sorgen für eine Rückkopplung an die Regeleinheit in der Regelvorrichtung 150. Wie vorstehend bereits dargelegt, umfasst die Regelvorrichtung 150 eine Optimierungseinheit 70, die dazu ausgebildet ist, Regelparameter adaptiv zu optimieren, um die Regelgüte und das Betriebsverhalten der Regelvorrichtung 150 insgesamt zu verbessern.

Eine Regelvorrichtung, die gemäß zumindest einem Aspekt der vorliegenden Offenbarung gestaltet ist, kann auf vielen Gebieten eingesetzt werden. Eine Anwendung ist beispielsweise beim Ultraschallschweißen vorstellbar, und zwar zur Regelung von Verfahrensparametern, wie Beispielsweise dem Anpressdruck. Parameter, die bei der Regelung eine Rolle spielen, können etwa ein Zylinderdruck in einem Zylinder, eine Anpresskraft, ein Schweißweg, und Ähnliches sein.

In ähnlicher Weise ist auch eine Anwendung beim Punktschweißen vorstellbar, Beispielweise in der Automobilindustrie. Hier geht es beispielsweise um Schweißzangen mit zwei Zylinderkammern, wobei der Druck in den Kammern von Interesse ist. Ferner ist der Differenzdruck zwischen beiden Zylinder Zylinderkammern ein relevanter Parameter. Ferner können auch der Schweißweg bzw. die Verstellung des Schweißweges in die Regelung einfließen.

Ein weiteres Anwendungsbeispiel ist die Regelung der Versorgung mit Kühlschmiermittel (KSS) bei Werkzeugmaschinen. Dies kann beispielsweise über pilotgesteuerte Ventile erfolgen. Wiederum ist der Pilotdruck von Interesse, ferner der resultierende Druck des Kühlschmiermittels sowie die resultierende Durchflussmenge des Kühlschmiermittels.

Es versteht sich, dass diese Anwendungsbeispiele lediglich exemplarischer Natur sind. Sie dienen nicht dazu, den Gegenstand der Offenbarung einzuschränken.

## Patentansprüche

1. Regelvorrichtung (150) zur Regelung einer physikalischen Größe eines Fluides, die Folgendes aufweist:
- eine Regeleinheit (10), die dazu ausgestaltet ist,
zumindest einen ersten Istwert (14) und zumindest einen ersten Sollwert (12) der physikalischen Größe des Fluides zu empfangen,
den ersten Istwert (14) und den ersten Sollwert (12) zu vergleichen, und, basierend auf diesem Vergleich und auf Basis zumindest eines Regelparameters (74), eine Stellgröße (16) zu berechnen und auszugeben; und
- eine Optimierungseinheit (70), die dazu ausgestaltet ist,
eine Mehrzahl von Istwerten (44) einer Mehrzahl von physikalischen Größen des Fluides zu erhalten,
die erhaltenen Istwerte (44) mit vorgegebenen Sollwertbereichen (330) zu vergleichen,
die erhaltenen Istwerte (44) mit Sollwerten (48) zu vergleichen, welche durch Variationen modifiziert wurden, wobei die Variationen kleine aufgeprägte Fehler umfassen, wobei die modifizierten Sollwerte (44) im vorgegebenen Sollwertbereich (330) liegen, und
die Regelparameter (74) basierend auf diesen Vergleichen und basierend auf dieser Mehrzahl von Istwerten (44) anzupassen und an die Regeleinheit (10) zu übergeben,
wobei die Optimierungseinheit (70) ein künstliches neuronales Netz umfasst.

2. Regelvorrichtung (150) nach Anspruch 1,
wobei die Optimierungseinheit (70) dazu ausgestaltet ist, beim Aktivieren der Regelvorrichtung (150) resultierende Veränderungen der Istwerte (44) der Mehrzahl von physikalischen Größen auszuwerten, und den Regelparameter (74) basierend auf dieser Auswertung anzupassen.

3. Regelvorrichtung (150) nach Anspruch 1 oder 2,
wobei die Optimierungseinheit (70) ferner dazu ausgestaltet ist, eine Mehrzahl von Sollwerten (48) einer Mehrzahl von physikalischen Größen des Fluides zu erhalten, und basierend auf diesen Sollwerten (48) den Regelparameter (74) anzupassen und an die Regeleinheit (10) zu übergeben.

4. Regelvorrichtung (150) nach Anspruch 3,
wobei die Optimierungseinheit (70) dazu ausgestaltet ist, die erhaltenen Istwerte (44) mit den Sollwerten (48) der Mehrzahl von physikalischen Größen des Fluides zu vergleichen, und basierend auf diesen Vergleichen die Regelparameter (74) anzupassen.

5. Regelvorrichtung (150) nach einem der Ansprüche 1 oder 4,
wobei die Optimierungseinheit (70) vorgegebene Sollwerte (48) erhält und diese der Optimierung zugrunde legt.

6. Regelvorrichtung (150) nach einem der Ansprüche 1 bis 5,
wobei die Optimierungseinheit (70) dazu ausgestaltet ist, die vorgegebenen Sollwerte (48) und/oder die vorgegebenen Sollwertbereiche (330) basierend auf den erhaltenen Istwerten (44) adaptiv anzupassen.

7. Regelvorrichtung (150) nach einem der Ansprüche 1 bis 6,
wobei die Optimierungseinheit (70) dazu ausgestaltet ist, einen vorgegebenen Regelparameter als Ursprungswert für die Anpassung des Regelparameters (74) zugrunde zu legen.

8. Regelvorrichtung (150) nach einem der Ansprüche 1 bis 7,
wobei die Regeleinheit (10) dazu ausgestaltet ist, eine Variation der Stellgröße (16) zu veranlassen, wobei die Variationen kleine aufgeprägte Fehler umfasst, wobei diese Variation der Stellgröße (16) eine Variation eines Istwerts einer physikalischen Größe durch den mindestens einen Aktuator (20) veranlasst, und
wobei die Optimierungseinheit (70) dazu ausgestaltet ist, zeitliche Variationen der erhaltenen Istwerte (44) auszuwerten, und den Regelparameter (74) basierend auf dieser Auswertung anzupassen, wobei die Variationen kleine aufgeprägte Fehler umfassen.

9. Regelsystem (200) zur Regelung einer physikalischen Größe eines Fluides, insbesondere in Form einer Ventilanordnung, wobei das Regelsystem (200) Folgendes aufweist:
- eine Regelvorrichtung (150) zur Regelung einer physikalischen Größe eines Fluides nach einem der vorhergehenden Ansprüche,
- zumindest einen Aktuator (20), der dazu ausgestaltet ist, die von der Regeleinheit (10) ausgegebene Stellgröße (16) zu empfangen und mindestens eine physikalische Größe des Fluides basierend auf der empfangenen Stellgröße (16) zu verändern, und
- einen oder mehrere Sensoren (40), die dazu ausgestaltet sind, eine Mehrzahl von Istwerten (44) der physikalischen Größen des Fluides zu messen.

10. Regelverfahren zur Regelung einer physikalischen Größe eines Fluides, das folgende Schritte aufweist:
- Empfangen eines ersten Istwerts (14) und eines ersten Sollwerts (12) der physikalischen Größe des Fluides durch eine Regeleinheit (10),
- Vergleichen des ersten Istwerts (14) und des ersten Sollwerts (12) durch die Regeleinheit (10),
- Berechnen und Ausgeben einer Stellgröße (16) durch die Regeleinheit (10), basierend auf diesem Vergleich und auf Basis zumindest eines Regelparameters (74),
- Empfangen einer Mehrzahl von Istwerten (44) einer Mehrzahl von physikalischen Größen des Fluides durch eine Optimierungseinheit (70)
- Vergleichen der erhaltenen Istwerte (44) mit vorgegebenen Sollwertbereichen (330) durch die Optimierungseinheit (70),
- Vergleichen der erhaltenen Istwerte (44) durch die Optimierungseinheit (70) mit Sollwerten (48), welche durch Variationen modifiziert wurden, wobei die Variationen kleine aufgeprägte Fehler umfassen, wobei die modifizierten Sollwerte (44) im vorgegebenen Sollwertbereich (330) liegen,
- Anpassen durch die Optimierungseinheit (70), mittels eines künstlichen neuronalen Netzes, zumindest eines Regelparameters (74) basierend auf diesen Vergleichen und basierend auf dieser Mehrzahl von Istwerten (44), und
- Übergeben des angepassten Regelparameters (74) an die Regeleinheit (10) durch die Optimierungseinheit (70).

## Claims

1. Regulating device (150) for regulating a physical quantity of a fluid, comprising the following:
- a regulating unit (10) arranged to
receive at least a first actual value (14) and at least a first set value (12) of the physical quantity of the fluid,
compare the first actual value (14) and the first set value (12), and, based on this comparison and on the basis of at least one regulating parameter (74), calculate and output a manipulated variable (16); and
- an optimization unit (70) arranged to
obtain a plurality of actual values (44) of a plurality of physical quantities of the fluid,
compare the obtained actual values (44) with predefined set value ranges (330),
compare the obtained actual values (44) with set values (48), which have been modified by variations, wherein the variations comprise small imposed errors, wherein the modified set values (44) are in the predefined set value range (330), and
adjust the regulating parameters (74) based on these comparisons and based of this plurality of actual values (44) and pass them on to the regulating unit (10),
wherein the optimization unit (70) comprises an artificial neural network.

2. Regulating device (150) according to claim 1,
wherein the optimization unit (70) is arranged to evaluate resulting changes of the actual values (44) of the plurality of physical quantities, when activating the regulating device (150), and to adjust the regulating parameter (74) based on this evaluation.

3. Regulating device (150) according to claim 1 or 2,
wherein the optimization unit (70) is further arranged to obtain a plurality of set values (48) of a plurality of physical quantities of the fluid, and to adjust the regulating parameter (74) based on these set values (48) and to pass it on to the regulating unit (10).

4. Regulating device (150) according to claim 3,
wherein the optimization unit (70) is arranged to compare the obtained actual values (44) with the set values (48) of the plurality of physical quantities of the fluid, and to adjust the regulating parameters (74) based on these comparisons.

5. Regulating device (150) according to one of the claims 1 or 4,
wherein the optimization unit (70) obtains predefined set values and bases the optimization thereon.

6. Regulating device (150) according to one of the claims 1 to 5,
wherein the optimization unit (70) is arranged to adaptively adjust the predefined set values (48) and/or the predefined set value ranges (330) based on the obtained actual values (44).

7. Regulating device (150) according to one of the claims 1 to 6,
wherein the optimization unit (70) is arranged to use a predefined regulating parameter as the original value for the adjustment of the regulating parameter (74).

8. Regulating device (150) according to one of the claims 1 to 7,
wherein the regulating unit (10) is arranged to cause a variation of the manipulated variable (16), wherein the variations comprise small imposed errors, wherein this variation of the manipulated variable (16) causes a variation of an actual value of a physical quantity by the at least one actuator (20), and
wherein the optimization unit (70) is arranged to evaluate temporal variations of the obtained actual values (44), and to adjust the regulating parameter (74) based on this evaluation, wherein the variations comprise small imposed errors.

9. Regulating system (200) for regulating a physical quantity of a fluid, in particular in the form of a valve arrangement, wherein the regulating system (200) comprises the following:
- a regulating device (150) for regulating a physical quantity of a fluid according to one of the preceding claims,
- at least one actuator (20), which is arranged to receive the manipulated variable (16) that is output from the regulating unit (10) and to change at least one physical quantity of the fluid based on the received manipulated variable (16), and
- one or more sensors (40) that are arranged to measure a plurality of actual values (44) of the physical quantities of the fluid.

10. Regulating method for regulating a physical quantity of a fluid, comprising the following steps:
- receiving a first actual value (14) and a first set value (12) of the physical quantity of the fluid by a regulating unit (10),
- comparing the first actual value (14) and the first set value (12) by the regulating unit (10),
- calculating and outputting a manipulated value (16) by a regulating unit (10), which is based on this comparison and on the basis of at least one regulating parameter (74),
- receiving a plurality of actual values (44) of a plurality of physical quantities of the fluid by an optimization device (70),
- comparing the obtained actual values (44) with the predefined set value ranges (330) by the optimization device (70),
- comparing the obtained actual values (44) by the optimization device (70) with set values (48) that are modified by variations, wherein the variations comprise small imposed errors, wherein the modified set values (44) are in the predefined set value range (330),
- adjusting by the optimization unit (70), by means of an artificial neural network, at least one regulating parameter (74) based on these comparisons and based on this plurality of actual values (44), and
- passing the adjusted regulating parameter (74) on to the regulating unit (10) by the optimization device (70).

## Revendications

1. Dispositif de régulation (150) permettant de réguler une grandeur physique d'un fluide, présentant ce qui suit :
- une unité de régulation (10) qui est configurée pour
recevoir au moins une première valeur réelle (14) et au moins une première valeur de consigne (12) de la grandeur physique du fluide,
comparer la première valeur réelle (14) et la première valeur de consigne (12), et
sur la base de cette comparaison et sur la base d'au moins un paramètre de régulation (74), calculer et sortir une grandeur de réglage (16) ; et
- une unité d'optimisation (70) qui est configurée pour
obtenir une pluralité de valeurs réelles (44) d'une pluralité de grandeurs physiques du fluide,
comparer les valeurs réelles (44) obtenues avec des plages de valeur de consigne (330) prédéfinies,
comparer les valeurs réelles (44) obtenues avec des valeurs de consigne (48) qui ont été modifiées par des variations, les variations comprenant de petites erreurs appliquées, les valeurs de consigne (44) modifiées étant situées dans la plage de valeur de consigne prédéfinie (330), et
ajuster les paramètres de réglage (74) sur la base de ces comparaisons et sur la base de cette pluralité de valeurs réelles (44) et les transmettre à l'unité de régulation (10),
l'unité d'optimisation (70) comprenant un réseau neuronal artificiel.

2. Dispositif de régulation (150) selon la revendication 1, dans lequel l'unité d'optimisation (70) est configurée pour évaluer des variations résultant lors de l'activation du dispositif de régulation (150) des valeurs réelles (44) de la pluralité de grandeurs physiques, et pour ajuster le paramètre de réglage (74) sur la base de cette évaluation.

3. Dispositif de régulation (150) selon la revendication 1 ou 2, dans lequel l'unité d'optimisation (70) est en outre configurée pour recevoir une pluralité de valeurs de consigne (48) d'une pluralité de grandeurs physiques du fluide, et pour ajuster le paramètre de réglage (74) sur la base de ces valeurs de consigne (48) et le transmettre à l'unité de régulation (10).

4. Dispositif de régulation (150) selon la revendication 3, dans lequel l'unité d'optimisation (70) est configurée pour comparer les valeurs réelles (44) obtenues avec les valeurs de consigne (48) de la pluralité de grandeurs physiques du fluide, et pour ajuster les paramètres de réglage (74) sur la base de ces comparaisons.

5. Dispositif de régulation (150) selon l'une quelconque des revendications 1 ou 4, dans lequel l'unité d'optimisation (70) reçoit des valeurs de consigne (48) prédéfinies et les utilise comme base pour l'optimisation.

6. Dispositif de régulation (150) selon l'une quelconque des revendications 1 à 5, dans lequel l'unité d'optimisation (70) est configurée pour ajuster de manière adaptative les valeurs de consigne (48) prédéfinies et/ou les plages de valeur de consigne (330) prédéfinies sur la base des valeurs réelles (44) obtenues.

7. Dispositif de régulation (150) selon l'une quelconque des revendications 1 à 6, dans lequel l'unité d'optimisation (70) est configurée pour se baser sur un paramètre de réglage prédéfini comme valeur d'origine pour l'ajustement du paramètre de réglage (74).

8. Dispositif de régulation (150) selon l'une quelconque des revendications 1 à 7, l'unité de régulation (10) étant configurée pour provoquer une variation de la grandeur de réglage (16), les variations comprenant de petites erreurs appliquées, cette variation de la grandeur de réglage (16) provoquant une variation d'une valeur réelle d'une grandeur physique par ledit au moins un actionneur (20), et l'unité d'optimisation (70) étant configurée pour évaluer des variations dans le temps des valeurs réelles (44) obtenues, et pour ajuster le paramètre de réglage (74) sur la base de cette évaluation, les variations comprenant de petites erreurs appliquées.

9. Système de régulation (200) permettant de réguler une grandeur physique d'un fluide, en particulier sous la forme d'un agencement de soupapes, le système de régulation (200) présentant ce qui suit :
- un dispositif de régulation (150) permettant de réguler une grandeur physique d'un fluide selon l'une quelconque des revendications précédentes,
- au moins un actionneur (20) qui est configuré pour recevoir la grandeur de réglage (16) sortie par l'unité de régulation (10) et pour modifier au moins une grandeur physique du fluide sur la base de la grandeur de réglage (16) reçue, et
- un ou plusieurs capteurs (40) qui sont configurés pour mesurer une pluralité de valeurs réelles (44) de la grandeur physique du fluide.

10. Procédé de régulation permettant de réguler une grandeur physique d'un fluide, qui présente les étapes suivantes consistant à :
- recevoir une première valeur réelle (14) et une première valeur de consigne (12) de la grandeur physique du fluide par une unité de régulation (10),
- comparer la première valeur réelle (14) et la première valeur de consigne (12) par l'unité de régulation (10),
- calculer et sortir une grandeur de réglage (16) par l'unité de régulation (10), sur la base ce cette comparaison et sur la base d'au moins un paramètre de réglage (74),
- recevoir une pluralité de valeurs réelles (44) d'une pluralité de grandeurs physiques du fluide par une unité d'optimisation (70),
- comparer les valeurs réelles (44) obtenues avec des plages de valeur de consigne prédéfinies (330) par l'unité d'optimisation (70),
- comparer les valeurs réelles (44) obtenues par l'unité d'optimisation (70) avec des valeurs de consigne (48) qui ont été modifiées par des variations, les variations comprenant de petites erreurs appliquées, les valeurs de consigne (44) modifiées étant situées dans la plage de valeur de consigne prédéfinie (330),
- ajuster par l'unité d'optimisation (70), au moyen d'un réseau neuronal artificiel, au moins un paramètre de réglage (74) sur la base de ces comparaisons et sur la base de cette pluralité de valeurs réelles (44), et
- transmettre le paramètre de réglage (74) ajusté à l'unité de régulation (10) par l'unité d'optimisation (70).
